# FASCICULE DE BREVET EUROPEEN

(11) **EP 2 126 424 B1**
(45) Date de publication et mention de la délivrance du brevet: **03.04.2013**
(21) Numéro de dépôt: 08762066.2
(22) Date de dépôt: 12.02.2008
(51) Int. Cl.: F16J 15/06, F02F 11/00

(54) **AGENCEMENT POUR LA FIXATION D'UN TURBOCOMPRESSEUR SUR UN ELEMENT DE LIGNE D'ECHAPPEMENT D'UN VEHICULE AUTOMOBILE**
ANORDNUNG ZUR ANBRINGUNG EINES TURBOLADERS AN EINEM ELEMENT DER ABGASLEITUNG EINES AUTOMOBILS
ASSEMBLY FOR ATTACHING A TURBOCHARGER ON A MEMBER OF THE EXHAUST LINE OF AN AUTOMOTIVE VEHICLE

(30) Priorité: 22.03.2007 FR 0753981
(43) Date de publication de la demande: 02.12.2009
(73) Titulaire: Renault SAS, 92100 Boulogne Billancourt (FR)
(72) Inventeur: CAZALY, Cédric, F-92190 Meudon (FR); PORTELA GARNIKA, Gonzalo, F-75012 Paris (FR); GIRAUD, Pascal, F-92500 Rueil Malmaison (FR)
(74) Mandataire: Rougemont, Bernard
(86) Numéro de dépôt international: PCT/FR2008/050214
(87) Numéro de publication internationale: WO 2008/113924

(56) Documents cités:
- EP-A- 1 443 251
- EP-A- 1 724 500
- DE-A1- 10 301 235
- JP-A- 57 190 737
- US-A- 5 524 906
- US-A- 5 992 595

## Description

L'invention concerne un agencement pour la fixation d'un turbocompresseur sur un élément de ligne d'échappement d'un véhicule automobile.

L'invention concerne plus particulièrement un agencement pour la fixation d'un turbocompresseur sur un élément de la ligne d'échappement d'un véhicule automobile, comprenant une semelle du turbocompresseur, qui comporte un orifice d'entrée de gaz d'échappement du turbocompresseur, qui est fixée sur une bride plane de fixation de l'élément comportant un orifice de sortie des gaz d'échappement coïncidant avec ledit orifice d'entrée, ledit agencement comprenant au moins un goujon de fixation, porté par la bride plane, qui traverse un perçage de la semelle, et un joint d'étanchéité, dont un premier perçage est traversé par le goujon et qui est interposé entre la bride et la semelle de manière qu'un second perçage dudit joint coïncide avec les orifices de sortie de la bride et d'entrée de la semelle, qui comporte des moyens de mise en position par rapport à la bride.

On connaît de nombreux exemples d'agencements de ce type, comme par exemple celui divulgué dans le document EP-A-1724500.

Les joints d'étanchéité qui sont par exemples interposés entre la bride d'un collecteur d'échappement et la semelle du turbocompresseur, comportent généralement une pluralité de nervures concentriques entourant le second perçage du joint, qui sont destinées à être écrasées lors du serrage de la semelle du turbocompresseur sur la bride du collecteur de manière à garantir une parfaite étanchéité de l'assemblage vis-à-vis des gaz d'échappement. Le positionnement de ces nervures tant par rapport à l'orifice de sortie des gaz de la bride du collecteur que par rapport à l'orifice d'entrée des gaz de la semelle du turbocompresseur, est capitale.

Conventionnellement, la mise en place du joint est réalisée préalablement à l'assemblage par rapport à la bride du collecteur d'échappement. Pour cela, le goujon de fixation est généralement utilisé comme un premier point de référence et on utilise au moins un second point de référence.

Il peut s'agir par exemple de pions, reçus dans des perçages de la bride du collecteur, qui traversent le joint et qui sont reçus dans des perçages de la semelle du turbocompresseur.

L'inconvénient de cette conception est le coût élevé d'usinage et d'assemblage de ces pions.

Pour remédier à cet inconvénient, on a proposé dans le document EP-A1-0.482.899 des languettes de mise en position, portées par la périphérie du joint, qui prennent appui sur un pourtour de la bride du collecteur.

Ces languettes présentent l'inconvénient d'être particulièrement fragiles. De plus, elles interdisent l'empilage des joints sur le site d'assemblage. Enfin, elles ne garantissent qu'imparfaitement la mise en position du joint, car le positionnement qu'elles assurent est tributaire des défauts de fabrication du pourtour de la bride du collecteur sur lequel elles prennent appui.

Pour remédier à cet inconvénient, l'invention propose un agencement du type décrit précédemment comportant une languette pliable coopérant avec une partie de la bride du collecteur, dont la position peut être déterminée de manière précise.

Dans ce but l'invention propose un agencement du type décrit précédemment, caractérisé en ce que les moyens de mise en position du joint comportent au moins une languette, portée par un bord du joint, qui est rabattue selon un angle déterminé par rapport au plan du joint et qui est reçue dans une encoche conforme formée sur le bord de la bride de l'élément.

Selon d'autres caractéristiques de l'invention :
- la languette est découpée dans le matériau du joint,
- le bord du joint est sensiblement rectiligne, la languette étant constituée de deux découpes de même longueur du matériau du joint, les découpes s'étendant perpendiculairement au bord vers l'intérieur du joint, la languette étant formée par pliage selon l'angle déterminé du matériau du joint compris entre les deux découpes pour constituer une arête formant charnière qui s'étend suivant une direction sensiblement parallèle au bord et qui est jointive avec les extrémités des découpes,
- chaque bord latéral de la languette est destiné à prendre appui sur une face latérale associée de l'encoche pour empêcher la rotation dans les deux sens du joint par rapport à la bride,
- le bord du joint est sensiblement rectiligne et la languette est constituée d'une découpe en "L" du matériau du joint qui est rabattue par rapport au plan du joint selon l'angle déterminé, la branche de petite longueur de la découpe en "L" s'étendant suivant une direction sensiblement perpendiculaire au bord vers l'intérieur du joint et la branche de grande longueur de la découpe en "L" s'étendant parallèlement au bord du joint, la languette étant formée par pliage du matériau du joint pour constituer une arête formant charnière qui s'étend suivant une direction sensiblement perpendiculaire au bord vers l'intérieur du joint parallèlement à la branche de petite longueur de la découpe en "L" et qui est jointive avec l'extrémité de la branche de grande longueur de la découpe en "L",
- une partie d'extrémité libre de la languette agencée en regard de la branche de petite longueur de la découpe en "L" est repliée selon une arête parallèle à la branche de petite longueur de la découpe en "L" pour conférer à la languette une section en chevron qui est reçue élastiquement dans l'encoche et dont l'extrémité libre est destinée à prendre appui sur un bord de l'encoche de l'élément,
- le joint comporte une pluralité de feuilles d'acier, et la languette est découpée dans une feuille inférieure agencée au contact de la bride plane de fixation de l'élément d'échappement,
- le joint comporte au moins une nervure entourant son second perçage, qui est destinée s'écraser lors du serrage du turbocompresseur sur la bride plane de l'élément d'échappement, et dont la position est prédéterminée par rapport au premier perçage et à la languette pour garantir un écrasement uniforme de ladite nervure lors du serrage du turbocompresseur sur la bride plane de l'élément d'échappement,
- l'élément de la ligne d'échappement est un collecteur d'échappement.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un agencement selon l'invention,
- la figure 2 est une vue en perspective d'un joint mis en oeuvre dans l'agencement selon un premier mode de réalisation de l'invention,
- la figure 3 est une vue en perspective d'un joint mis en oeuvre dans l'agencement selon un deuxième mode de réalisation de l'invention,
- la figure 4 est une vue en perspective du joint de la figure 3 mis en place sur la bride du collecteur d'échappement.

Dans la description qui va suivre, des chiffres de référence identiques désignent des pièces identiques ou ayant des fonctions similaires.

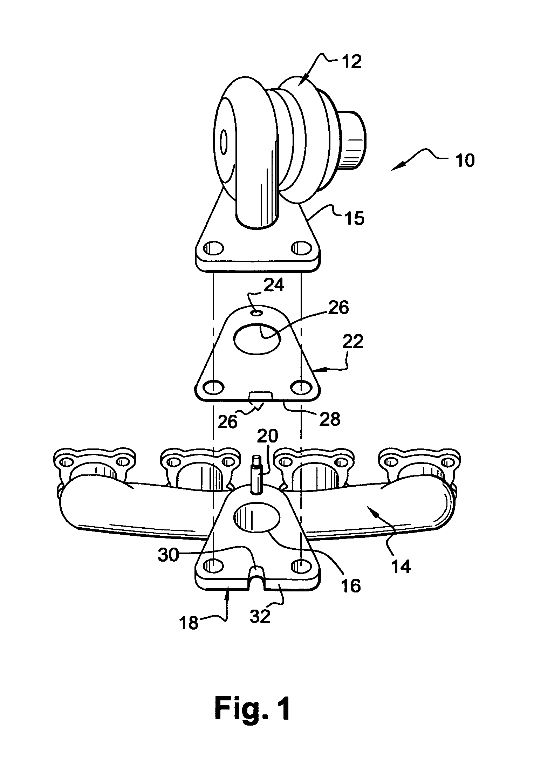

On a représenté sur la figure 1 un agencement 10 réalisé conformément à l'invention.

De manière connue, l'agencement 10 est destiné à permettre la fixation d'un turbocompresseur 12 sur un élément 14 de ligne d'échappement d'un véhicule automobile. Dans la description qui suit, l'élément 14 sera à titre non limitatif un collecteur d'échappement 14.

Une semelle 15 du turbocompresseur 12, qui comporte un orifice (non représenté) d'entrée de gaz d'échappement du turbocompresseur, est fixée sur une bride plane 18 de fixation du collecteur 14 comportant un orifice 16 de sortie des gaz d'échappement coïncidant avec l'orifice d'entrée du turbocompresseur 12.

La bride plane 18 comporte au moins un goujon 20 de fixation, qui est destiné à traverser un perçage (non représenté) de la semelle 15.

Par ailleurs un joint d'étanchéité 22, dont un premier perçage 24 est traversé par le goujon 20, est interposé entre la bride 18 et la semelle 15 de manière qu'un second perçage 26 dudit joint 22 coïncide avec l'orifice 16 de sortie de la bride 18 et l'orifice d'entrée de la semelle 15.

Conventionnellement, un tel agencement 10 comporte des moyens de mise en position par rapport à la bride 18 qui sont constitués de languettes de mise en position, portées par la périphérie du joint 22, qui prennent appui sur un pourtour de la bride 18 du collecteur 14.

Ces languettes présentent l'inconvénient d'être particulièrement fragiles. De plus, elles interdisent l'empilage des joints 22 sur le site d'assemblage. Enfin, elles ne garantissent qu'imparfaitement la mise en position du joint 22, car le positionnement qu'elles assurent est tributaire des défauts de fabrication du pourtour de la bride 18 du collecteur 14 sur lequel elles prennent appui.

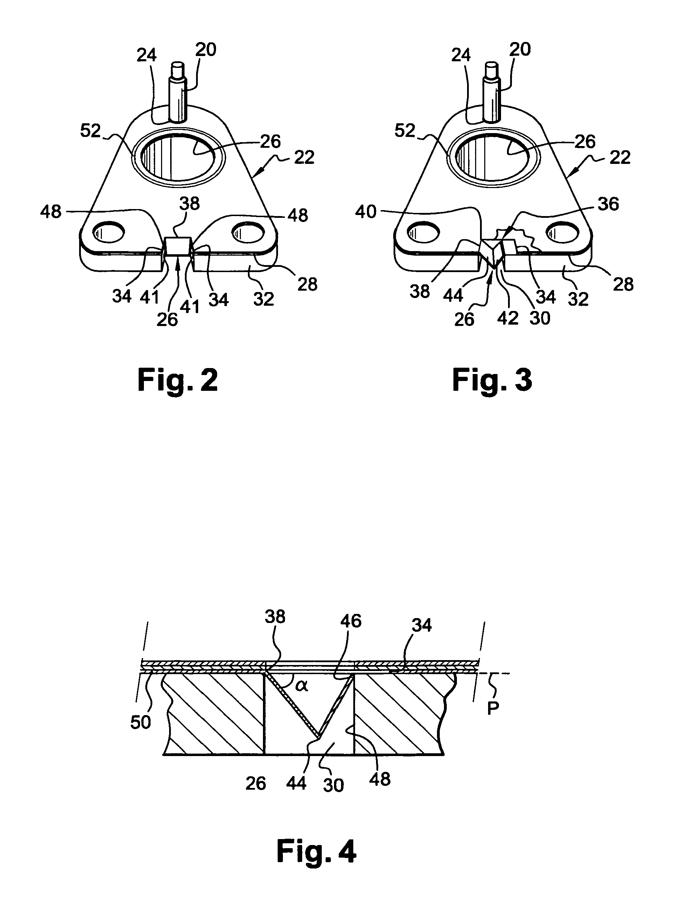

Pour remédier à cet inconvénient, comme l'illustrent les figures 2 à 4, l'invention propose un agencement 10 du type décrit précédemment, caractérisé en ce que les moyens de mise en position du joint comportent au moins une languette 26, portée par un bord 28 du joint 22, qui est rabattue selon un angle "α" déterminé par rapport au plan "P" du joint 22 et qui est reçue dans une encoche 30 conforme formée sur le bord 32 de la bride 18 du collecteur 14.

Avantageusement, la languette 26 est découpée dans le matériau du joint 22. Cette configuration n'est pas limitative de l'invention, et la languette 26 pourrait être une languette rapportée.

Selon un premier mode de réalisation de l'invention qui est représenté à la figure 2, le bord 28 du joint 22 est sensiblement rectiligne et la languette 26 est constituée de deux découpes 34 de même longueur du matériau du joint 22.

Les découpes 34 s'étendent perpendiculairement au bord 28 vers l'intérieur du joint 22.

Dans cette configuration, la languette 26 est formée par pliage selon l'angle α déterminé du matériau du joint 22 compris entre les deux découpes pour constituer une arête 38 formant charnière qui s'étend suivant une direction sensiblement parallèle au bord 28.

L'arête 38 est plus particulièrement jointive avec les extrémités 40 des découpes.

La languette 26 ainsi obtenue comporte un bord d'extrémité libre, qui est constitué par un bord du joint 22 avant découpe, et deux bords parallèles latéraux 41 qui sont formés par les découpes.

Chaque bord latéral 41 de la languette 26 est destiné à prendre appui sur une face latérale 48 associée de l'encoche 30 pour empêcher la rotation dans les deux sens du joint 22 par rapport à la bride 18 autour de l'axe du goujon 20.

Selon un deuxième mode de réalisation de l'invention, comme l'illustrent les figures 2 à 4, le bord 28 du joint 22 est sensiblement rectiligne et la languette 26 est constituée d'une découpe en "L" du matériau du joint 22 qui est rabattue par rapport au plan "P" du joint selon l'angle "α" déterminé.

La branche 34 de petite longueur de la découpe en "L" s'étend suivant une direction sensiblement perpendiculaire au bord 28 vers l'intérieur du joint 22 et la branche 36 de grande longueur de la découpe en "L" s'étend parallèlement au bord 28 du joint 22.

Dans cette configuration, la languette 26 est formée par pliage du matériau du joint 22 pour constituer une arête 38 formant charnière qui s'étend suivant une direction sensiblement perpendiculaire au bord 28 vers l'intérieur du joint 22 parallèlement à la branche 34 de petite longueur de la découpe en "L" et qui est jointive avec l'extrémité 40 de la branche 36 de grande longueur de la découpe en "L".

La languette ainsi constituée pourrait être sensiblement plane, mais de préférence une partie 42 d'extrémité libre de la languette 26, qui est agencée en regard de la branche 34 de petite longueur de la découpe en "L", est repliée selon une arête 44 parallèle à la branche 34 de petite longueur de la découpe en "L" pour conférer à la languette une section en chevron, représentée figure 2, qui est reçue élastiquement dans l'encoche 30 et dont l'extrémité libre 46 est destinée à prendre appui sur une face latérale 48 de l'encoche 30 du collecteur 14.

Dans le deuxième mode de réalisation de l'invention, comme l'illustre la figure 2, le joint 22 comporte une pluralité de feuilles d'acier empilées, et la languette 26 est découpée dans une feuille inférieure 50 qui est agencée au contact de la bride plane 18 de fixation du collecteur 14 d'échappement. De la sorte, la réalisation de la languette 26 ne pénalise pas la rigidité du joint 22.

Il sera compris que cet agencement, réalisé selon l'une ou l'autre des modes de réalisation décrits précédemment, trouve naturellement à s'appliquer à un joint 22 qui comporte au moins une nervure 52 entourant son second perçage 26, ladite nervure 52 étant destinée s'écraser lors du serrage du turbocompresseur 12 sur la bride 18 plane du collecteur d'échappement pour garantir une parfaite étanchéité de l'assemblage ainsi réalisé.

En effet une telle nervure 52 doit être mise en position de manière très précise par rapport aux orifices de sortie du collecteur et d'entrée du turbocompresseur pour garantir une parfaite étanchéité de l'assemblage ainsi réalisé lors du serrage du turbocompresseur 12 sur la bride 18 plane du collecteur d'échappement.

Le joint 22 selon l'invention, dont la position du perçage 26 est prédéterminée par rapport au premier perçage 24 et à la languette 22 permet de garantir un écrasement uniforme de la nervure 52 entourant le perçage 26 lors du serrage du turbocompresseur 12 sur la bride 18 plane du collecteur d'échappement.

L'invention permet donc de simplifier considérablement le montage d'un joint 22 interposé entre un turbocompresseur 12 et un collecteur 14 d'échappement, ou entre un turbocompresseur 12 et tout autre élément 14 de la ligne d'échappement.

## Revendications

1. Agencement (10) pour la fixation d'un turbocompresseur (12) sur un élément (14) de la ligne d'échappement d'un véhicule automobile, comprenant une semelle (15) du turbocompresseur (12), qui comporte un orifice d'entrée de gaz d'échappement du turbocompresseur (12), qui est fixée sur une bride plane (18) de fixation de l'élément (14) comportant un orifice (16) de sortie des gaz d'échappement coïncidant avec ledit orifice d'entrée, ledit agencement (10) comprenant au moins un goujon (20) de fixation, porté par la bride plane (18), qui traverse un perçage (24) de la semelle (15), et un joint d'étanchéité (22), dont un premier perçage (24) est traversé par le goujon (20) et qui est interposé entre la bride (18) et la semelle (15) de manière qu'un second perçage (26) dudit joint (22) coïncide avec les orifices de sortie (16) de la bride (18) et d'entrée de la semelle (15), qui comporte des moyens de mise en position par rapport à la bride (18),
**caractérisé en ce que** les moyens de mise en position du joint (22) comportent au moins une languette (26), portée par un bord (28) du joint (22), qui est rabattue selon un angle (α) déterminé par rapport au plan (P) du joint (26) et qui est reçue dans une encoche (30) conforme formée sur le bord (32) de la bride (18) de l'élément (14).

2. Agencement (10) selon la revendication précédente, **caractérisé en ce que** la languette (26) est découpée dans le matériau du joint (22).

3. Agencement (10) selon la revendication précédente, **caractérisé en ce que** le bord (28) du joint (22) est sensiblement rectiligne et **en ce que** la languette (26) est constituée de deux découpes (34) de même longueur du matériau du joint (22), les découpes (34) s'étendant perpendiculairement au bord (28) vers l'intérieur du joint (22), la languette (26) étant formée par pliage selon l'angle (α) déterminé du matériau du joint (22) compris entre les deux découpes (34) pour constituer une arête (38) formant charnière qui s'étend suivant une direction sensiblement parallèle au bord (28) et qui est jointive avec les extrémités (40) des découpes (34).

4. Agencement (10) selon la revendication précédente, **caractérisé en ce que** chaque bord latéral de la languette (26) est destiné à prendre appui sur une face latérale (48) associée de l'encoche (30) pour empêcher la rotation dans les deux sens du joint (22) par rapport à la bride (18).

5. Agencement (10) selon la revendication 2, **caractérisé en ce que** le bord (28) du joint (22) est sensiblement rectiligne et **en ce que** la languette (26) est constituée d'une découpe en "L" du matériau du joint (22) qui est rabattue par rapport au plan (P) du joint (22) selon l'angle (α) déterminé, la branche (34) de petite longueur de la découpe en "L" s'étendant suivant une direction sensiblement perpendiculaire au bord (28) vers l'intérieur du joint (22) et la branche (36) de grande longueur en "L" s'étendant parallèlement au bord (28) du joint (22), la languette (26) étant formée par pliage du matériau du joint (22) pour constituer une arête (38) formant charnière qui s'étend suivant une direction sensiblement perpendiculaire au bord (28) vers l'intérieur du joint (22) parallèlement à la branche (34) de petite longueur de la découpe en "L" et qui est jointive avec l'extrémité (40) de la branche (36) de grande longueur de la découpe en "L".

6. Agencement (10) selon la revendication précédente, **caractérisé en ce qu'**une partie (42) d'extrémité libre de la languette (26) agencée en regard de la branche (34) de grande longueur de la découpe en "L" est repliée selon une arête (44) parallèle à la branche (34) de petite longueur de la découpe en "L" pour conférer à la languette (26) une section en chevron qui est reçue élastiquement dans l'encoche (30) et dont l'extrémité libre (46) est destinée à prendre appui sur une face latérale (48) de l'encoche (30) de l'élément (14).

7. Agencement (10) selon l'une quelconque des revendications 3 à 6, **caractérisé en ce que** le joint (22) comporte une pluralité de feuilles d'acier, et **en ce que** la languette (26) est découpée dans une feuille inférieure (50) agencée au contact de la bride (18) plane de fixation de l'élément (14) d'échappement.

8. Agencement (10) selon l'une quelconque des revendications 1 à 7, **caractérisé en ce que** le joint (22) comporte au moins une nervure (52) entourant son second perçage (26), qui est destinée s'écraser lors du serrage du turbocompresseur (12) sur la bride plane (18) de l'élément (14) d'échappement, et dont la position est prédéterminée par rapport au premier perçage (24) et à la languette (26) pour garantir un écrasement uniforme de ladite nervure (52) lors du serrage du turbocompresseur (12) sur la bride plane (18) de l'élément (14) de la ligne d'échappement.

9. Agencement (10) selon l'une quelconque des revendications précédentes, **caractérisé en ce que** l'élément (14) de la ligne d'échappement est un collecteur (14) d'échappement.

## Claims

1. Arrangement (10) for attaching a turbocharger (12) to an element (14) of the exhaust line of an automotive vehicle, comprising a sole plate (15) of the turbocharger (12), which comprises an inlet orifice for exhaust gases to enter the turbocharger (12), which is attached to a flat attachment flange (18) of the element (14) comprising an exhaust gas outlet orifice (16) that coincides with said inlet orifice, said arrangement (10) comprising at least one attachment stud (20), borne by the flat flange (18), which passes through a drilling in the sole plate (15), and a sealing gasket (22), through a first drilling (24) of which the stud (20) passes and which is interposed between the flange (18) and the sole plate (15) in such a way that a second drilling (26) of said gasket (22) coincides with the outlet orifice (16) of the flange (18) and the inlet orifice of the sole plate (15), which comprises means of positioning with respect to the flange (18),
**characterized in that** the means of positioning of the gasket (22) comprise at least one tab (26), borne by an edge (28) of the gasket (22) and which is folded down at a set angle (α) with respect to the plane (P) of the gasket (22) and received in a matching cut-out (30) formed on the edge (32) of the flange (18) of the element (14).

2. Arrangement (10) according to the preceding claim, **characterized in that** the tab (26) is cut into the material of the gasket (22).

3. Arrangement (10) according to the preceding claim, **characterized in that** the edge (28) of the gasket (22) is substantially straight, and **in that** the tab (26) consists of two cuts (34) of equal length in the material of the gasket (22), the cuts (34) running perpendicular to the edge (28) toward the inside of the gasket (22), the tab (26) being formed by bending the material of the gasket (22) lying between the two cuts (34) at the set angle (α) to constitute a hinge-forming arris (38) which runs in a direction substantially parallel to the edge (28) and which is contiguous with the ends (40) of the cuts (34).

4. Arrangement (10) according to the preceding claim, **characterized in that** each lateral edge of the tab (26) is intended to rest against an associated lateral face (48) of the cut-out (30) to prevent the gasket (22) from rotating in both directions relative to the flange (18).

5. Arrangement (10) according to Claim 2, **characterized in that** the edge (28) of the gasket (22) is substantially straight, and **in that** the tab (26) consists of an L-shaped cut in the material of the gasket (22), which is bent with respect to the plane (P) of the gasket (22) at the set angle (α), the shorter-length branch (34) of the L-shaped cut running in a direction substantially perpendicular to the edge (28) toward the inside of the gasket (22), and the longer-length branch (36) of the L-shaped cut running parallel to the edge (28) of the gasket (22), the tab (26) being formed by bending the material of the gasket (22) to constitute a hinge-forming arris (38) which runs in a direction substantially perpendicular to the edge (28) toward the inside of the gasket (22) parallel to the shorter-length branch (34) of the L-shaped cut and which is contiguous with the end (40) of the longer-length branch (36) of the L-shaped cut.

6. Arrangement (10) according to the preceding claim, **characterized in that** a free end part (42) of the tab (26) positioned facing the longer-length branch (34) of the L-shaped cut is folded along an arris (44) parallel to the shorter-length branch (34) of the L-shaped cut to give the tab (26) a chevron-shaped section which is elastically accommodated in the cut-out (30) and the free end (46) of which is intended to rest against a lateral face (48) of the cut-out (30) of the element (14).

7. Arrangement (10) according to any one of Claims 3 to 6, **characterized in that** the gasket (22) comprises a plurality of steel leaves, and **in that** the tab (26) is cut into a lower leaf (50) placed in contact with the flat attachment flange (18) of the exhaust element (14).

8. Arrangement (10) according to any one of Claims 1 to 7, **characterized in that** the gasket (22) comprises at least one rib (52) surrounding its second drilling (26), which rib is intended to flatten when the turbocharger (12) is tightened down onto the flat flange (18) of the exhaust element (14), and the position of which is preset with respect to the first drilling (24) and to the tab (26) to guarantee uniform compression of said rib (52) as the turbocharger (12) is tightened down onto the flat flange (18) of the exhaust line element (14).

9. Arrangement (10) according to any one of the preceding claims, **characterized in that** the exhaust line element (14) is an exhaust manifold (14).

## Patentansprüche

1. Anordnung (10) zur Befestigung eines Turboladers (12) an einem Element (14) der Auspuffanlage eines Kraftfahrzeugs, die eine Grundplatte (15) des Turboladers (12) enthält, die eine Eingangsöffnung für Abgase des Turboladers (12) aufweist, die an einem ebenen Befestigungsflansch (18) des Elements (14) befestigt ist, der eine Ausgangsöffnung (16) der Abgase aufweist, die mit der Eingangsöffnung zusammenfällt, wobei die Anordnung (10) mindestens einen vom ebenen Flansch (18) getragenen Befestigungsstift (20), der eine Bohrung der Grundplatte (15) durchquert, und eine Dichtung (22) enthält, von der eine erste Bohrung (24) vom Stift (20) durchquert wird, und die zwischen dem Flansch (18) und der Grundplatte (15) so eingefügt ist, dass eine zweite Bohrung (26) der Dichtung (22) mit der Ausgangsöffnung (16) des Flanschs (18) und der Eingangsöffnung der Grundplatte (15) zusammenfällt, die Einrichtungen zur Positionierung bezüglich des Flanschs (18) aufweist,
**dadurch gekennzeichnet, dass** die Positioniereinrichtungen der Dichtung (22) mindestens eine von einem Rand (28) der Dichtung (22) getragene Zunge (26) aufweisen, die gemäß einem bestimmten Winkel (α) bezüglich der Ebene (P) der Dichtung (22) umgebogen ist und die in einer entsprechenden Kerbe (30) aufgenommen wird, die am Rand (32) des Flanschs (18) des Elements (14) geformt ist.

2. Anordnung (10) nach dem vorhergehenden Anspruch, **dadurch gekennzeichnet, dass** die Zunge (26) aus dem Material der Dichtung (22) ausgeschnitten wird.

3. Anordnung (10) nach dem vorhergehenden Anspruch, **dadurch gekennzeichnet, dass** der Rand (28) der Dichtung (22) im Wesentlichen geradlinig ist, und dass die Zunge (26) aus zwei Ausschnitten (34) gleicher Länge des Materials der Dichtung (22) besteht, wobei die Ausschnitte (34) sich lotrecht zum Rand (28) zur Innenseite der Dichtung (22) erstrecken, wobei die Zunge (26) durch Umbiegen gemäß dem bestimmten Winkel (α) des Materials der Dichtung (22) geformt wird, das zwischen den zwei Ausschnitten (34) liegt, um eine ein Scharnier bildende Kante (38) zu formen, die sich in einer Richtung im Wesentlichen parallel zum Rand (28) erstreckt und die an die Enden (40) der Ausschnitte (34) anschließt.

4. Anordnung (10) nach dem vorhergehenden Anspruch, **dadurch gekennzeichnet, dass** jeder Seitenrand der Zunge (26) dazu bestimmt ist, auf einer zugeordneten Seitenfläche (48) der Kerbe (30) aufzuliegen, um die Drehung der Dichtung (22) bezüglich des Flanschs (18) in beiden Richtungen zu verhindern.

5. Anordnung (10) nach Anspruch 2, **dadurch gekennzeichnet, dass** der Rand (28) der Dichtung (22) im Wesentlichen geradlinig ist, und dass die Zunge (26) aus einem "L"-förmigen Ausschnitt des Materials der Dichtung (22) besteht, der bezüglich der Ebene (P) der Dichtung (22) gemäß dem bestimmten Winkel (α) umgeschlagen ist, wobei der Schenkel (34) kleiner Länge des "L"-förmigen Ausschnitts sich in einer Richtung im Wesentlichen lotrecht zum Rand (28) zum Inneren der Dichtung (22) erstreckt, und der Schenkel (36) großer Länge des "L"-förmigen Ausschnitts sich parallel zum Rand (28) der Dichtung (22) erstreckt, wobei die Zunge (26) durch Umbiegen des Materials der Dichtung (22) geformt wird, um eine ein Scharnier formende Kante (38) zu bilden, die sich in einer Richtung im Wesentlichen lotrecht zum Rand (28) zum Inneren der Dichtung (22) parallel zum Schenkel (34) kleiner Länge des "L"-förmigen Ausschnitts erstreckt, und die an das Ende (40) des Schenkels (36) großer Länge des "L"-förmigen Ausschnitts anschließt.

6. Anordnung (10) nach dem vorhergehenden Anspruch, **dadurch gekennzeichnet, dass** ein freier Endbereich (42) der Zunge (26), der gegenüber dem Schenkel (34) großer Länge des "L"-förmigen Ausschnitts angeordnet ist, gemäß einer Kante (44) parallel zum Schenkel kleiner Länge (34) des "L"-förmigen Ausschnitts umgebogen ist, um der Zunge (26) einen Zickzackquerschnitt zu verleihen, der elastisch in der Kerbe (30) aufgenommen wird, und dessen freies Ende (46) dazu bestimmt ist, auf einer Seitenfläche (48) der Kerbe (30) des Elements (14) aufzuliegen.

7. Anordnung (10) nach einem der Ansprüche 3 bis 6, **dadurch gekennzeichnet, dass** die Dichtung (22) eine Vielzahl von Stahlfolien aufweist, und dass die Zunge (26) aus einer unteren Folie (50) ausgeschnitten wird, die in Kontakt mit dem ebenen Befestigungsflansch (18) des Auspuffelements (14) angeordnet ist.

8. Anordnung (10) nach einem der Ansprüche 1 bis 7, **dadurch gekennzeichnet, dass** die Dichtung (22) mindestens eine ihre zweite Bohrung (26) umgebende Rippe (52) aufweist, die dazu bestimmt ist, beim Festklemmen des Turboladers (12) auf dem ebenen Flansch (18) des Auspuffelements (14) zusammengequetscht zu werden, und deren Stellung bezüglich der ersten Bohrung (24) und der Zunge (26) vorherbestimmt ist, um ein gleichmäßiges Zusammenquetschen der Rippe (52) beim Festklemmen des Turboladers (12) auf dem ebenen Flansch (18) des Elements (14) der Auspuffanlage zu garantieren.

9. Anordnung (10) nach einem der vorhergehenden Ansprüche, **dadurch gekennzeichnet, dass** das Element (14) der Auspuffanlage ein Auspuffkrümmer (14) ist.
